# FASCICULE DE BREVET EUROPEEN

(11) **EP 4 103 420 B1**
(45) Date de publication et mention de la délivrance du brevet: **02.09.2026**
(21) Numéro de dépôt: 21703043.6
(22) Date de dépôt: 09.02.2021
(51) Int. Cl.: B60K 1/04, B60K 11/06, B60K 1/00

(54) **AGENCEMENT D'UNE PARTIE ARRIÈRE DE VÉHICULE COMPORTANT UN DISPOSITIF DE RÉGULATION THERMIQUE D'UNE BATTERIE**
ANORDNUNG EINES HINTEREN TEILS EINES FAHRZEUGS MIT EINER THERMISCHEN REGELVORRICHTUNG FÜR EINE BATTERIE
ARRANGEMENT OF A REAR PART OF A VEHICLE COMPRISING A THERMAL REGULATION DEVICE FOR A BATTERY

(30) Priorité: 11.02.2020 FR 2001339
(43) Date de publication de la demande: 21.12.2022
(73) Titulaire: Renault S.A.S., 92100 Boulogne-Billancourt (FR); NISSAN MOTOR Co., Ltd., Yokohama-shi, Kanagawa 221-0023 (JP)
(72) Inventeur: BROISIN-DOUTAZ, Marc, 78280 GUYANCOURT (FR)
(74) Mandataire: Renault Group
(86) Numéro de dépôt international: PCT/EP2021/053016
(87) Numéro de publication internationale: WO 2021/160579

(56) Documents cités:
- WO-A1-2012/032271
- DE-A1- 102013 215 273
- US-A1- 2009 090 575
- US-B2- 9 627 721

## Description

La présente est du domaine de la construction automobile et concerne plus particulièrement un agencement particulier d'un dispositif de régulation thermique notamment dédié au management thermique d'une batterie dédiée au stockage de l'énergie électrique.

Dans les véhicules actuels, le mode de propulsion fait de plus en plus appel à l'énergie électrique pour suppléer ou assister les traditionnels moteurs à combustion. L'énergie électrique ainsi embarquée sur véhicule doit être stockée dans au moins une batterie qui nécessite pour ses besoins de fonctionnement optimaux, une régulation en température afin de rester autant que possible dans des conditions optimales de fonctionnement malgré son évolution dans un environnement fluctuant fortement en termes de température. Un véhicule embarquant une batterie est, comme tout véhicule d'ailleurs, soumis à des contraintes thermiques fortes, allant d'une chaleur excessive en été à un froid glacial en hivers. Pour limiter une usure prématurée et irréversible de la batterie, il est connu de positionner la batterie, parfois même le dispositif de régulation thermique associé, directement dans une zone protégée de l'extérieur du véhicule, à savoir dans le coffre par exemple. L'inconvénient d'une telle conception est de restreindre le volume du coffre, ce qui est d'autant plus pénalisant pour l'utilisateur d'un véhicule de taille à vocation citadine.

DE 10 2013 215273 A1 décrit une structure arrière de caisse comportant un cadre dans lequel est disposé un ensemble de batteries et un dispositif de ventilation logé dans une boîte faisant saillie verticalement hors d'une ouverture du plancher de coffre. Une plaque de recouvrement est empilée au-dessus de la boîte.

Par conséquent, la présente invention a pour but de résoudre ces problèmes en proposant un agencement tendant à résoudre cette problématique.

L'objet de l'invention concerne un agencement d'une partie arrière de véhicule, notamment d'une automobile comportant au moins une batterie de stockage d'énergie électrique, la partie arrière comportant une structure arrière de caisse délimitée par un plancher d'un compartiment de coffre et des passages latéraux de roue, selon lequel la batterie est disposée sous le plancher et en ce qu'il comprend un dispositif de régulation thermique de la batterie disposé pour partie à l'intérieur d'au moins un des passages latéraux de roue délimité pour partie par une paroi intérieure.

L'agencement objet de l'invention peut également comporter les caractéristiques suivantes prises séparément ou en combinaison entre elles :
- le dispositif de régulation thermique comprend un motoventilateur, un conduit principal d'apport d'air, un conduit secondaire d'aspiration d'air reliant la batterie au motoventilateur, un conduit secondaire d'évacuation d'air pulsée reliant le motoventilateur au compartiment de coffre,
- le passage latéral de roue comprend une ouverture de la paroi intérieure au travers de laquelle s'étend le conduit secondaire d'évacuation d'air pulsé,
- il comprend un élément d'étanchéité disposé au niveau de l'ouverture du passage latéral de roue, notamment au niveau d'une paroi intérieure de passage de roue afin d'étancher le conduit secondaire d'évacuation d'air traversant le passage de roue,
- au moins l'un parmi les conduits secondaires d'aspiration d'air et d'évacuation d'air pulsé comprend au moins une zone déformable, notamment une portion extensible, permettant de rompre partiellement la liaison rigide du conduit secondaire fixé d'un côté à la batterie ou à la caisse, d'un autre côté au motoventilateur,
- il comprend un moyen d'amortissement disposé entre le motoventilateur et la caisse, notamment une paroi intérieure de passage de roue arrière sur lequel le motoventilateur est fixé,
- un canal intérieur arrière de compartiment de coffre est réalisé par le passage de roue, notamment la paroi intérieure, un renfort de feu arrière, une jupe arrière et une garniture de jupe arrière,
- il comprend un dispositif d'extraction d'air disposé au niveau de la jupe arrière,
- le conduit principal d'apport d'air est disposé sur le plancher arrière de coffre, s'étend au travers d'une ouverture du plancher de coffre, une extrémité du conduit principal s'étendant au travers d'au moins un passage ménagé au moins en partie au niveau d'une garniture latérale de siège, le passage étant prolongé d'un canal intérieur avant,
- le canal intérieur avant est réalisé par le passage de roue, notamment la paroi intérieure, et la garniture latérale de siège laquelle comporte notamment une grille logée à proximité d'un siège de telle sorte que l'air à destination de la batterie à refroidir est l'air de l'habitacle, notamment un air climatisé,
- la batterie comporte une ouverture d'entrée d'air de refroidissement reliée au conduit principal d'apport d'air, une ouverture de sortie d'air reliée au motoventilateur par le conduit secondaire d'aspiration d'air,
- la mise en fonctionnement du motoventilateur engendre une circulation d'air au travers de la grille d'air, notamment située au niveau de la garniture latérale (35) de siège, puis du canal intérieur avant, puis du conduit principal d'apport d'air, puis de la batterie de stockage d'énergie électrique, puis du conduit secondaire d'aspiration d'air reliant la sortie de la batterie à l'entrée du motoventilateur, puis au travers du motoventilateur,
- l'air pulsé par le motoventilateur circule ensuite au travers du conduit secondaire d'évacuation d'air reliant la sortie du motoventilateur au canal intérieur arrière de compartiment de coffre,
- l'air pulsé circule ensuite au travers du dispositif d'extraction d'air du compartiment de coffre rendant apte l'évacuation de l'air pulsé par le motoventilateur vers l'extérieur du véhicule,
- l'air pulsé par le motoventilateur circule ensuite au travers du conduit secondaire d'évacuation d'air débouchant dans le passage de roue.

D'autres avantages et caractéristiques de l'invention apparaîtront au cours de la description qui suit d'un mode préféré de réalisation de l'invention, donné à titre d'exemple non limitatifs, en référence aux dessins annexés.
La figure 1 illustre schématiquement une partie arrière d'une caisse de véhicule sur laquelle est réalisé l'agencement selon l'invention.
La figure 2 illustre schématiquement le dispositif de régulation thermique d'une batterie tel que cela visible sur la figure 1.
La figure 3 illustre schématiquement, par une vue en coupe transversale du passage de roue du véhicule de la figure 1, le positionnement du dispositif de régulation thermique sur le véhicule, selon l'invention.
La figure 4 illustre schématiquement, par un agrandissement d'une zone de pied arrière de caisse vu de l'intérieur, une partie du dispositif de régularisation thermique ainsi que des éléments de garniture intérieure de caisse qui forment une partie du dispositif de régularisation thermique, selon l'invention.
La figure 5 illustre schématiquement, par une coupe transversale de la caisse, la partie arrière de la caisse, selon l'invention.
La figure 6 illustre schématiquement, par une vue arrière du véhicule, un agencement particulier de la partie arrière du véhicule, selon l'invention.
La figure 7 illustre schématiquement, par une vue en coupe longitudinale une variante de réalisation du dispositif de régulation thermique de la batterie, selon l'invention.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

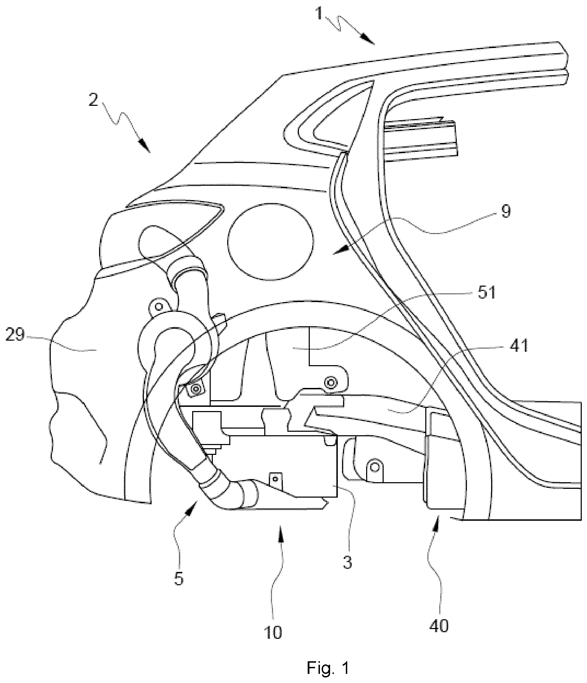

La figure 1 illustre schématiquement un véhicule 1, en particulier un véhicule automobile, selon un mode de réalisation de l'invention. La partie arrière du véhicule automobile 1 est représentée sur la figure 1 selon une vue de côté. Cette partie arrière comprend un côté latéral de caisse délimité par une pièce latérale de carrosserie 9 prolongée pour partie par un pare-choc arrière 29. Cet ensemble constitué du côté de caisse et du pare-choc arrière délimite un passage latéral 5 de roue arrière. Cet ensemble coopère avec une paroi intérieure 51 et d'une paroi extérieure 52 de la caisse qui forme le volume intérieur du passage latéral 5 de roue. Ces parois 51, 52 et la pièce latérale de carrosserie 9 formant le côté latéral de caisse sont soudées ensembles afin de créer une caisse sur laquelle est fixé de manière réversible le parechoc arrière 29. Une fois le parechoc arrière 29 assemblé à la caisse, ses extrémités sont disposées pour partie au prolongement du côté latéral de caisse, notamment à affleurement au niveau de sa jonction avec le pièce latérale de carrosserie 9.

La caisse du véhicule comprend un soubassement 40 ayant des poutres 41 longitudinales qui sont assemblées à un plancher arrière 4 de coffre 7. De manière avantageuse, la batterie 3 est logée sous le plancher du véhicule. Cela a pour effet de ne par réduire le volume de coffre, voire même de garder à l'identique le volume de coffre quelle que soit la typologie du système de propulsion du véhicule.

La batterie 3 est une batterie de stockage d'énergie, notamment de stockage d'énergie électrique, qui peut être utilisée par une redistribution contrôlée pour le déplacement du véhicule. A cet effet, la batterie 3 est reliée électriquement à un moteur électrique (non représenté) dont le fonctionnement est piloté par une unité de contrôle. La batterie 3 est protégée de l'extérieur par un cloisonnement formant une enveloppe 300. Une telle enveloppe 300 permet une protection mécanique de la batterie 3. Du fait de l'espace créé entre l'enveloppe et le corps même de la batterie 3, un réseau de canaux permet de créer des voies d'échange thermique entre la batterie 3 et un flux d"air qui circule à l'intérieur de l'enveloppe 300 afin de maintenir en état de fonctionnement la batterie 3.

L'agencement d'une partie arrière de véhicule selon l'invention permet d'intégrer les moyens utiles à ce maintien en température de la batterie.

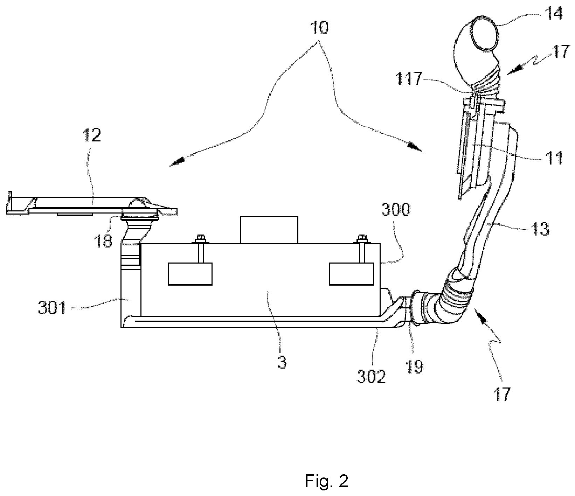

A cet effet, le dispositif de régularisation 10 thermique de la batterie est représenté de manière isolée du reste du véhicule à la figure 2. Il permet de créer le flux d'air utile au maintien à température nominale de la batterie 3.

La figure 2 illustre schématiquement un tel dispositif qui se compose d'un conduit principal 12 d'apport d'air, de l'enveloppe 300 de batterie 3, d'un conduit secondaire d'aspiration 13, d'un motoventilateur 11 et d'un conduit secondaire d'évacuation 14.

La liaison du conduit principal 12 d'apport d'air avec la batterie est réalisée par une ouverture d'entrée d'air 18 ménagée sur la batterie 3, plus particulièrement au niveau de l'enveloppe 300 l'entourant. A titre d'exemple, cette batterie 3 comporte un conduit vertical 301 à l'extrémité duquel se trouve l'ouverture d'entrée d'air 18. Un tel conduit vertical 301 est un répartiteur d'air destiné à diffuser l'air entrant au travers de l'ensemble des cellules de la batterie 3, tout du moins en direction des éléments chauffant que sont les cellules de la batterie 3.

L'enveloppe 300 comprend un collecteur 302 qui assure la collecte de l'air réchauffé par l'échange thermique avec les cellules de la batterie 3, l'extrémité libre du collecteur 302 comportant une ouverture de sortie d'air 19.

L'ouverture de sortie d'air 19 est raccordée à la conduite secondaire d'aspiration 13 qui est fluidiquement reliée au motoventilateur 11.

La sortie du motoventilateur 11 est reliée au conduit secondaire d'évacuation d'air 14.

Le motoventilateur 11 comprend une volute qui comprend une ouverture axiale d'entrée d'air et une ouverture radiale de sortie d'air, par rapport à la roue 110 à aubes de ventilation. Toutefois, d'autres typologies de ventilateur peuvent être utilisées.

Le motoventilateur 11 comprend une volute 111 sur laquelle est montée à rotation la roue 110 qui est associée à une motorisation, notamment un électromoteur. La volute 111 définit le corps du motoventilateur 11 qui est assemblé à la caisse, notamment à la proi intérieure 51 du passage de roue, par l'intermédiaire d'au moins un plot d'amortissement 112, préférentiellement trois plots d'amortissement. La paroi intérieure 51 comprend des vis de fixation sur laquelle sont emmanchés des plots en caoutchouc maintenus en position par des écrous. Le recours à des plots en caoutchouc permet d'annuler la transmission des vibrations générées par la mise en fonctionnement du motoventilateur 11.

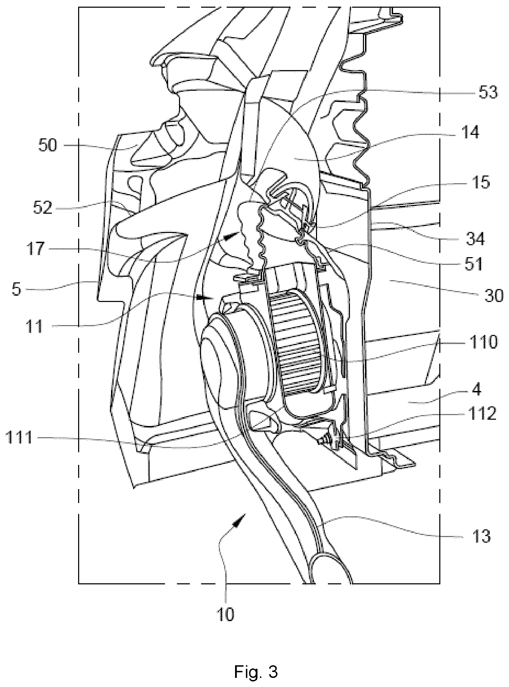

Du fait de ce montage flottant du motoventilateur, il est également fait recours à d'autres moyens d'amortissement qui permettent un léger débattement du motoventilateur 11. A titre d'exemple, le conduit secondaire d'aspiration 13 comprend une zone déformable 17 en ce sens qu'elle est présente une moindre rigidité. Une zone de moindre rigidité peut être obtenue par une moindre épaisseur cumulée à une conformation en accordéon du conduit secondaire d'aspiration 13. A titre d'exemple, le conduit secondaire d'évacuation 14 peut être relié à la sortie d'air du motoventileur par un manchon 117 en caoutchouc, comme cela est visible sur la figure 3. Du fait de l'emmanchement du manchon 117 sur le conduit secondaire d'évacuation 14, le manchon 117 forme la zone déformable 17 du conduit 14.

Le conduit secondaire d'évacuation 14 traverse une ouverture 53 pratiquée au travers de la portion intérieure 51 du passage de roue. Compte tenu que la motoventilateur 11 est disposé dans une zone humide à l'extérieur de la caisse, il convient d'étancher l'ouverture 53 par un élément d'étanchéité, ce qui peut être directement réalisé par le manchon 117.

Le conduit secondaire d'évacuation 14 s'étend à l'intérieur du compartiment de coffre 7, préférentiellement entre la paroi intérieur 51 et la garniture latérale 34 de coffre. Ainsi le conduit secondaire d'évacuation 14 comporte une extrémité libre qui est disposée dans un canal intérieur arrière 20 qui est formé pour partie par la caisse et pour partie par des éléments de garniture qui viennent à recouvrement de la caisse afin de masquer cette dernière, notamment une garniture arrière 30 de jupe.

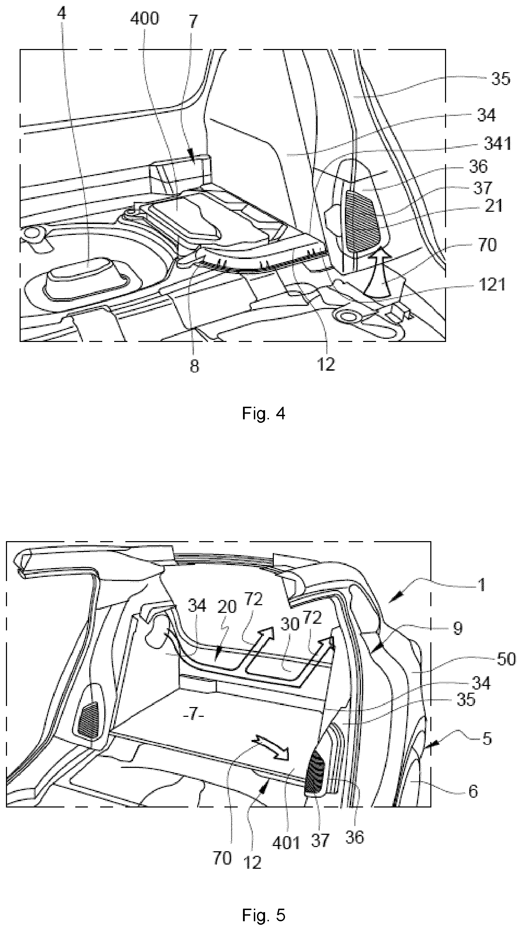

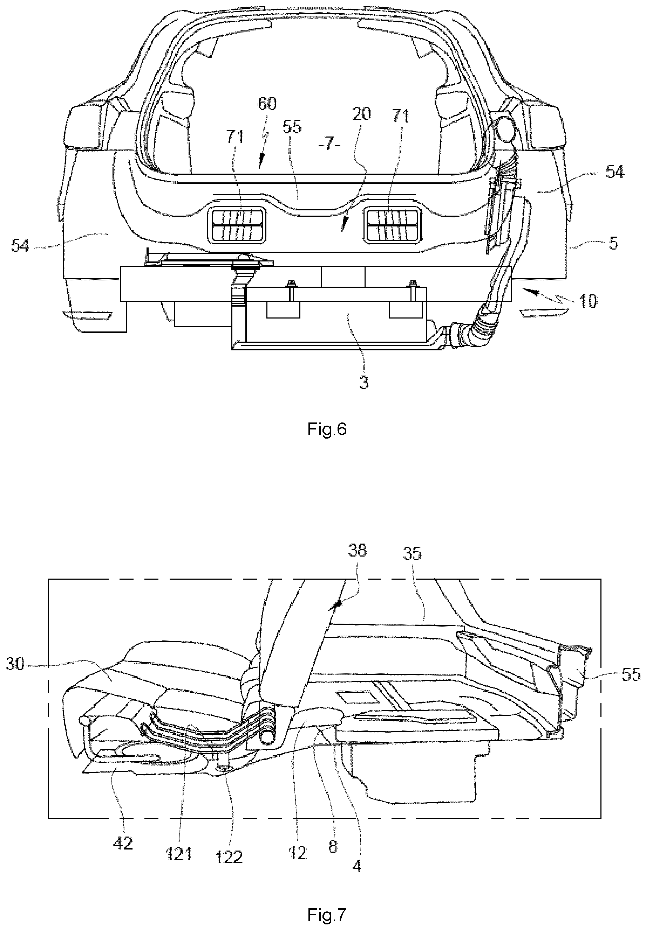

Les figures 5 et 6 illustrent, par le biais des flèches 72, l'écoulement d'air sortant du conduit secondaire d'évacuation 14 puis est dirigé vers l'extérieur du véhicule par un dispositif d'extraction d'air 60. Un tel dispositif 71 est disposé sur une paroi transversale nommée jupe arrière 55 qui relie les deux côtés latéraux de la caisse.

Le mode de réalisation de la figure 6 comprend deux extracteurs 71 d'air sachant qu'un seul extracteur d'air est suffisant pour assurer l'évacuation de l'air présent dans le compartiment de coffre 7. Un extracteur 71 d'air est un dispositif à clapets mobile qui s'ouvre sous l'effet d'une surpression de l'habitacle, provoqué par la fermeture d'une porte ou le fonctionnement du véhicule.

Le fait de rediriger l'air prélevé dans l'habitacle directement à l'intérieur du compartiment de coffre communiquant avec l'habitacle permet de manière avantageuse de ne pas perturber l'écoulement d'air entrant dans l'habitacle car la pression entre le compartiment habitacle et le compartiment de coffre reste sensiblement identique. Ce mode de réalisation à l'avantage de ne pas perturber le fonctionnement du dispositif de climatisation du véhicule.

Les figures 4 et 5 mettent en évidence les moyens utilisés pour prélever un air destiné au refroidissement de la batterie, notamment un air d'habitacle qui a été préalablement climatisé, tel qu'il est représenté par la flèche 70.

Lors de la mise en fonctionnement du motoventilateur, l'air 70 de l'habitacle est aspiré au travers de la grille 37 qui est agencée sur une garniture latérale de siège 35.

Une telle garniture latérale 35 de siège est disposée au prolongement de la garniture 34 de coffre, et elle vise à masquer une portion de caisse nommée pied arrière.

Selon un mode de réalisation des figures 4 et 5, la garniture latérale de siège 35 comprend une trappe 36 qui est une paroi amovible permettant d'accéder à une zone intérieure de la garniture latérale de siège 35. La grille 37 est réalisée sur la trappe. L'aspiration de l'air se fait ensuite par le conduit principal 12 d'apport d'air à la batterie 3, dont l'extrémité libre 121 s'étend au travers d'un passage 341 ménagé sur la garniture latérale 35. Le passage 341 est préférentiellement localisé au niveau du bord inférieur de la garniture 35 qui est destiné à venir au regard du plancher 4. Le conduit principal 12 permet de créer une liaison fluidique entre la grille et la batterie 3 disposée sous le plancher. Afin de rejoindre la batterie 3, une ouverture 8 est créée au niveau du plancher 4. L'ouverture 8 est une ouverture de section sensiblement identique à la section de l'extrémité du conduit principal 12, au jeu de montage près et d'intégration d'un moyen approprié d'étanchéité, telle que par exemple un anneau de caoutchouc encerclant le conduit principal 12. Ce dernier est fixé au plancher par vissage, il comprend donc à cet effet des pattes de fixation. Le conduit principal 12 est réalisé par moulage d'une matière plastique, notamment par l'assemblage de deux coquilles rapportées l'une sur l'autre.

Compte tenu du fait que l'extrémité libre 121 du conduit principal 12 débouche dans une cavité formée par la garniture latérale 35 de siège, un canal intérieur avant 21 réalise une liaison fluidique entre la grille 37 et le conduit principal 12. Le canal intérieur est formé par la garniture latérale de siège 35 et la caisse du véhicule, notamment la paroi intérieure 51 de passage de roue.

Le conduit principal 12 est préférentiellement de section rectangulaire de sorte qu'il s'intègre dans le plancher 4 de coffre de telle sorte que sa partie sommitale ne soit pas en saillie hors d'un autre élément de coffre, tel que par exemple un couvercle 400 d'accès à une batterie secondaire (non représentée). Une telle conception a pour avantage d'avoir une garniture de recouvrement 401 de coffre approximativement plane comme cela est rendu visible sur la figure 5. Sur cette même figure, il est remarquable de voir que l'agencement de cette partie arrière de véhicule est linéaire dans ses formes de telle sorte que le volume de chargement du coffre est nullement impacté par la présente du dispositif de régulation thermique 10 de la batterie. Par conséquent, quel que soit la typologie du moyen de propulsion du véhicule, force est de constater que le volume de coffre est identique. C'est un avantage qualitatif que l'utilisateur du véhicule appréciera à sa juste valeur.

De préférence, les conduites secondaire 13 et 14 sont réalisées par moulage d'une matière plastique. Ils peuvent être réalisés par un principe de soufflage d'air afin de créer un corps creux.

La circulation de l'air prélevée dans l'habitacle au travers de la batterie 3 permet une régulation thermique de la batterie. Les différentes liaisons du dispositif de régulation thermique 10 à la batterie 3 ainsi que le montage réversible de la batterie 3 contre la face extérieure du plancher 4 de coffre permet une maintenance facilitée, notamment un remplacement de la batterie sans nécessiter un remplacement des éléments constitutifs du dispositif de régularisation thermique 10.

A titre d'exemple, l'agencement tel qu'il est sur les figures comprend un seul motoventilateur disposé dans un passage de roue. Il pourrait bien entendu en être autrement, notamment en proposant un agencement où chaque passage de roue comprend un dispositif de régularisation thermique 10. L'un au moins des passages de roue avant pourrait aussi comprend un dispositif de régularisation thermique 10 par air d'un dispositif à réguler, ici une batterie 3 sachant qu'il pourrait s'agit aussi d'un tout autre dispositif à refroidir par air.

Le passage 5 de roue 6 situé à droite sur la figure est le passage arrière droit de roue. Il est délimité par une paroi intérieure 51 contre laquelle est rapportée soudée une doublure 52 de passage de roue délimitant la paroi extérieure 52. L'ensemble constitué des parois intérieure 51 et extérieure 52 est recouvert d'un côté de caisse 50. Un écran de protection (non représenté) peut également être disposé dans le passage de roue afin de créer un écran de protection contre la remontée de projectiles contre le dispositif de régulation thermique 10.

Le dispositif 10 de régulation thermique de la batterie 3 est destiné à la circulation d'un air prélevé dans l'habitacle. Il ne nécessite pas un dispositif de création ou de transport de frigories de sorte qu'il est simple dans sa mise en œuvre.

Le dispositif de régulation thermique 10 comprend en complément des différents conduits 12, 13, 14 au moins un canal intérieur, notamment un canal intérieur avant 21 et un canal intérieur arrière 20.

Selon une variante de réalisation, le conduit secondaire d'évacuation comprend une sortie qui débouche aussi du côté extérieur du passage de roue. Cela permet d'éviter de diffuser un air chauffé par l'échange thermique avec la batterie 3 à refroidir à l'intérieur du compartiment de coffre 7.

De par les sections évolutives des différents conduits, notamment du conduit secondaire d'aspiration 13, le dispositif 10 s'intègre aux différents de soubassement de caisse afin de ne pas créer un quelconque point saillant hors du véhicule, ce qui en ferait un point sensible de par sa vulnérabilité en fonctionnement normal du véhicule.

La mise en fonctionnement du motoventilateur 11 peut être pilotée par un calculateur de sorte que le flux d'air de refroidissement de la batterie 3 peut être évolutif selon les conditions instantanées de fonctionnement du véhicule.

Dans le cas d'un véhicule hybride, le calculateur de commande du motoventilateur peut être un calculateur moto qui est destiné à piloter le fonctionnement du moteur à combustion interne ainsi que le fonctionnement du moteur électrique de propulsion. Différents paramètres peuvent être utilisés isolément ou en combinaison pour piloter, notamment en puissance, le motoventilateur 11, notamment la température de la batterie 3 via un capteur de température dédié. La température d'air ambiant, d'air extérieur, de la puissance instantanée cumulée de propulsion, ... Une catographie peut aussi être utilisée de sorte qu'à un point de fonctionnement donné du véhicule est établi par un calculateur le fonctionnement du motoventilateur.

Selon une variante de réalisation non représentée, la conduite secondaire d'évacuation 14 débouche directement dans le passage de roue, c'est-à-dire à l'extérieur du coffre 7. Dans ce cas, le calculateur de commande du motoventilateur 11 tient compte du fonctionnement du dispositif de cllimatisation parce que le contrôle de l'air entrant dans le véhicule est influencé par le fonctionnement du motoventilateur 11 qui prélève de l'habitacle un air à destination de l'extérieur.

Selon une autre variante de réalisation représentée à la figure 7, le conduit principal 12 d'air d'apport d'air à la batterie se présente sous la forme d'un conduit sensiblement linéaire d'axe sensiblement longitudinal, dont l'extrémité avant 121 débouche sous une assise 39 de siège 38. L'extrémité 121 comprend une ouverture qui se situe ainsi à proximité d'une cave à pied, ce qui est avantageux en termes de collecte d'un air climatisé provenant du dispositif de climatisation du véhicule. Positionné ainsi sous le siège, le conduit principal 12 est fixé au plancher 42 du véhicule par vissage, il comporte à cet effet une patte de fixation 122 dédiée. Une vis en saillie hors du plancher 42 rend apte une tel assemblage. L'extrémité opposée à l'extrémité 121 avant est à l'identique du mode de réalisation décrit précédemment, à savoir qu'il s'étend au travers de l'ouverture 8 pratiquée dans le plancher 4 de coffre 7.

De manière avantageuse, le dispositif de régulation thermique 10 de la batterie est masqué par un écran de protection disposé dans le passage de roue. Il est ainsi rendu invisible de l'extérieur du véhicule. Le dispositif est en outre parfaitement intégré à la caisse du fait de la conception de chacune des pièces qui le composent. Le positionnement du motoventilateur 11 derrière la roue 6 n'entrave aucunement le débattement de la roue 6 lors du fonctionnement normal du véhicule.

L'agencement selon l'invention est remarquable en ce qu'il permet de maintenir un niveau de confort d'utilisation du véhicule quelle que soit la typologie de construction du véhicule thermique ou hybride du véhicule. Le compartiment de coffre 7 reste inchangé en volumétrie, gage d'une parfaite intégration du dispositif de régulation de la batterie disposée sous la caisse du véhicule.

## Revendications

1. Agencement d'une partie arrière (2) de véhicule (1), notamment d'une automobile comportant au moins une batterie (3) de stockage d'énergie électrique, la partie arrière comportant une structure arrière de caisse délimitée par un plancher (4) d'un compartiment de coffre (7) et des passages latéraux (5) de roue (6), **caractérisé en ce que** la batterie est disposée sous le plancher (4) et **en ce qu'**il comprend un dispositif de régulation thermique (10) de la batterie disposé pour partie à l'intérieur d'au moins un des passages latéraux (5) de roue délimité pour partie par une paroi intérieure (51).

2. Agencement selon la revendication précédente, **caractérisé en ce que** le dispositif de régulation thermique (10) comprend un motoventilateur (11), un conduit principal (12) d'apport d'air, un conduit secondaire d'aspiration (13) d'air reliant la batterie au motoventilateur, un conduit secondaire d'évacuation (14) d'air pulsée reliant le motoventilateur au compartiment (7) de coffre.

3. Agencement selon la revendication précédente, **caractérisé en ce que** le passage latéral (5) de roue comprend une ouverture (53) de la paroi intérieure (51) au travers de laquelle s'étend le conduit secondaire d'évacuation (14) d'air pulsé.

4. Agencement selon la revendication précédente, **caractérisé en ce qu'**il comprend un élément d'étanchéité (15) disposé au niveau de l'ouverture (53) du passage latéral (5) de roue, notamment au niveau d'une paroi intérieure (51) de passage de roue afin d'étancher le conduit secondaire d'évacuation (14) d'air traversant le passage de roue.

5. Agencement selon l'une quelconque des revendications 2 à 4, **caractérisé en ce qu'**au moins l'un parmi les conduits secondaires d'aspiration (13) d'air et d'évacuation (14) d'air pulsé comprend au moins une zone déformable (17), notamment une portion extensible, permettant de rompre partiellement la liaison rigide du conduit secondaire (13, 14) fixé d'un côté à la batterie ou à la caisse, d'un autre côté au motoventilateur (11).

6. Agencement selon l'une quelconque des revendications 2 à 5, **caractérisé en ce qu'**il comprend un moyen d'amortissement disposé entre le motoventilateur (11) et la caisse, notamment une paroi intérieure (51) de passage (5) de roue arrière sur lequel le motoventilateur est fixé.

7. Agencement selon l'une quelconque des revendications 2 à 5, **caractérisé en ce qu'**un canal intérieur arrière (20) de compartiment de coffre (7) est réalisé par le passage de roue (5), notamment la paroi intérieure (51), un renfort de feu arrière (54), une jupe arrière (55) et une garniture de jupe arrière (30).

8. Agencement selon la revendication précédente, **caractérisé en ce qu'**il comprend un dispositif d'extraction d'air (60) disposé au niveau de la jupe arrière (55).

9. Agencement selon l'une quelconque des revendications 2 à 8, **caractérisé en ce que** le conduit principal (12) d'apport d'air est disposé sur le plancher arrière (4) de coffre, s'étend au travers d'une ouverture (8) du plancher (4) de coffre, une extrémité (121) du conduit principal (12) s'étendant au travers d'au moins un passage (341) ménagé au moins en partie au niveau d'une garniture latérale (35) de siège, le passage étant prolongé d'un canal intérieur avant (21).

10. Agencement selon la revendication précédente, **caractérisé en ce que** le canal intérieur avant (21) est réalisé par le passage de roue, notamment la paroi intérieure (51), et la garniture latérale (35) de siège laquelle comporte notamment une grille (37) logée à proximité d'un siège de telle sorte que l'air à destination de la batterie à refroidir est l'air de l'habitacle, notamment un air climatisé.

11. Agencement selon l'une quelconque des revendications 2 à 10, **caractérisé en ce que** la batterie (3) comporte une ouverture d'entrée d'air (18) de refroidissement reliée au conduit principal d'apport (12) d'air, une ouverture de sortie d'air (19) reliée au motoventilateur (11) par le conduit secondaire d'aspiration (13) d'air.

12. Agencement selon l'une quelconque des revendications 2 à 11, selon lequel la mise en fonctionnement du motoventilateur (11) engendre une circulation d'air au travers :
- de la grille (37) d'air, notamment située au niveau de la garniture latérale (35) de siège, puis
- du canal intérieur avant (21), puis
- du conduit principal d'apport (12) d'air, puis
- de la batterie (3) de stockage d'énergie électrique, puis
- du conduit secondaire d'aspiration (13) d'air reliant la sortie de la batterie à l'entrée du motoventilateur (11), puis
- au travers du motoventilateur (11).

13. Agencement selon la revendication précédente, selon lequel l'air pulsé par le motoventilateur (11) circule ensuite au travers du conduit secondaire d'évacuation (14) d'air reliant la sortie du motoventilateur au canal intérieur arrière (20) de compartiment de coffre (7).

14. Agencement selon la revendication précédente en combinaison avec la revendication 8, selon lequel l'air pulsé circule ensuite au travers du dispositif d'extraction (60) d'air du compartiment (7) de coffre rendant apte l'évacuation de l'air pulsé par le motoventilateur (11) vers l'extérieur du véhicule (1).

15. Agencement selon la revendication 12, selon lequel l'air pulsé par le motoventilateur (11) circule ensuite au travers du conduit secondaire d'évacuation (14) d'air débouchant dans le passage de roue.

## Patentansprüche

1. Anordnung eines hinteren Teils (2) eines Fahrzeugs (1), insbesondere eines Kraftfahrzeugs, mit mindestens einer Batterie (3) zur Speicherung elektrischer Energie, wobei der hintere Teil eine hintere Karosseriestruktur aufweist, die durch einen Boden (4) eines Kofferraums (7) und seitliche Kästen (5) für Räder (6) begrenzt ist, die Batterie unter dem Boden (4) angeordnet ist, die Anordnung eine Vorrichtung zur Temperaturregelung (10) der Batterie aufweist, **dadurch gekennzeichnet, dass** die Vorrichtung zur Temperaturregelung (10) der Batterie teilweise innerhalb mindestens eines der seitlichen Radkästen (5) angeordnet ist, der teilweise durch eine Innenwand (51) begrenzt ist.

2. Anordnung nach dem vorhergehenden Anspruch, **dadurch gekennzeichnet, dass** die Vorrichtung zur Temperaturregelung (10) einen Motorlüfter (11) aufweist, einen Hauptkanal (12) für die Luftzufuhr, einen Sekundärkanal für die Ansaugung (13) der Luft, der die Batterie mit dem Motorlüfter verbindet, und einen Sekundärkanal für die Ableitung (14) der angesaugten Luft, der den Motorlüfter mit dem Kofferraum (7) verbindet.

3. Anordnung nach dem vorhergehenden Anspruch, **dadurch gekennzeichnet, dass** der seitliche Radkasten (5) eine Öffnung (53) in der Innenwand (51) aufweist, durch die sich der Sekundärkanal für die Ableitung (14) der angesaugten Luft erstreckt.

4. Anordnung nach dem vorhergehenden Anspruch, **dadurch gekennzeichnet, dass** sie ein Dichtungselement (15) aufweist, das an der Öffnung (53) des seitlichen Radkastens (5) angeordnet ist, insbesondere an einer Innenwand (51) des Radkastens, um den Sekundärkanal für die Ableitung (14) der Luft abzudichten, der den Radkasten durchquert.

5. Anordnung nach einem der Ansprüche 2 bis 4, **dadurch gekennzeichnet, dass** mindestens einer der Sekundärkanäle für die Ansaugung (13) der Luft und die Ableitung (14) der angesaugten Luft mindestens einen verformbaren Bereich (17) aufweist, insbesondere einen dehnbaren Abschnitt, der es ermöglicht, die starre Verbindung des Sekundärkanals (13, 14), die auf der einen Seite an der Batterie oder der Karosserie und auf der anderen Seite am Motorlüfter (11) befestigt ist, teilweise zu unterbrechen.

6. Anordnung nach einem der Ansprüche 2 bis 5, **dadurch gekennzeichnet, dass** sie ein Dämpfungsmittel aufweist, das zwischen dem Motorlüfter (11) und der Karosserie angeordnet ist, insbesondere eine Innenwand (51) des Radkastens (5) des Hinterrads, an der der Motorlüfter befestigt ist.

7. Anordnung nach einem der Ansprüche 2 bis 5, **dadurch gekennzeichnet, dass** ein hinterer Innenkanal (20) des Kofferraums (7) durch den Radkasten (5), insbesondere die Innenwand (51), eine Rückleuchtenverstärkung (54), eine Heckschürze (55) und eine Heckschürzenverkleidung (30) gebildet wird.

8. Anordnung nach dem vorhergehenden Anspruch, **dadurch gekennzeichnet, dass** sie eine an der Heckschürze (55) angeordnete Luftabsaugvorrichtung (60) aufweist.

9. Anordnung nach einem der Ansprüche 2 bis 8, **dadurch gekennzeichnet, dass** der Hauptkanal (12) für die Luftzufuhr auf dem hinteren Kofferraumboden (4) angeordnet ist und sich durch eine Öffnung (8) im Kofferraumboden (4) erstreckt, wobei ein Ende (121) des Hauptkanals (12) sich durch mindestens einen Durchgang (341) erstreckt, der mindestens teilweise in Höhe einer seitlichen Sitzverkleidung (35) angeordnet ist, wobei der Durchgang durch einen vorderen Innenkanal (21) verlängert ist.

10. Anordnung nach dem vorhergehenden Anspruch, **dadurch gekennzeichnet, dass** der vordere Innenkanal (21) durch den Radkasten, insbesondere die Innenwand (51), und die seitliche Sitzverkleidung (35) gebildet wird, die insbesondere ein Gitter (37) aufweist, das so in der Nähe eines Sitzes angeordnet ist, dass die Luft, die zur Kühlung der Batterie bestimmt ist, die Luft aus dem Fahrgastraum ist, insbesondere klimatisierte Luft.

11. Anordnung nach einem der Ansprüche 2 bis 10, **dadurch gekennzeichnet, dass** die Batterie (3) eine mit dem Hauptkanal (12) für die Luftzufuhr verbundene Kühllufteinlassöffnung (18) aufweist und eine Luftaustrittsöffnung (19), die über den Sekundärkanal für die Ansaugung (13) der Luft mit dem Motorlüfter (11) verbunden ist.

12. Anordnung nach einem der Ansprüche 2 bis 11, wobei die Inbetriebnahme des Motorlüfters (11) zu einer Luftzirkulation führt durch:
- das Luftgitter (37), das sich insbesondere auf Höhe der seitlichen Sitzverkleidung (35) befindet, dann
- den vorderen Innenkanal (21), dann
- den Hauptkanal (12) für die Luftzufuhr, dann
- die Batterie (3) zur Speicherung elektrischer Energie, dann
- den Sekundärkanal für die Ansaugung (13) der Luft, der den Ausgang der Batterie mit dem Eingang des Motorlüfters (11) verbindet, dann
- durch den Motorlüfter (11).

13. Anordnung nach dem vorhergehenden Anspruch, wobei die vom Motorlüfter (11) geförderte Luft anschließend durch den Sekundärkanal für die Ableitung (14) der angesaugten Luft strömt, der den Auslass des Motorlüfters mit dem hinteren Innenkanal (20) des Kofferraums (7) verbindet.

14. Anordnung nach dem vorhergehenden Anspruch in Kombination mit Anspruch 8, wobei die angesaugte Luft anschließend durch die Luftabsaugvorrichtung (60) des Kofferraums (7) strömt, wodurch die durch den Motorlüfter (11) angesaugte Luft aus dem Fahrzeug (1) nach außen abgeführt werden kann.

15. Anordnung nach Anspruch 12, wobei die vom Motorlüfter (11) angesaugte Luft anschließend durch den Sekundärkanal für die Ableitung (14) der Luft strömt, der in den Radkasten mündet.

## Claims

1. Arrangement of a rear part (2) of a vehicle (1), in particular of a motor vehicle having at least one battery (3) for storing electrical energy, the rear part having a rear bodyshell structure delimited by a floor (4) of a trunk compartment (7) and lateral arches (5) for the wheels (6), the battery is disposed beneath the floor (4), the arrangement comprises a device (10) for thermal regulation of the battery, **characterized in that** the device (10) for thermal regulation of the battery is disposed partly inside at least one of the lateral wheel arches (5), which is delimited partly by an inner wall (51).

2. Arrangement according to the preceding claim, **characterized in that** the thermal regulation device (10) comprises a motor-fan (11), a main air supply duct (12), a secondary air intake duct (13) connecting the battery to the motor-fan, a secondary pulsed-air evacuation duct (14) connecting the motor-fan to the trunk compartment (7).

3. Arrangement according to the preceding claim, **characterized in that** the lateral wheel arch (5) comprises an opening (53) in the inner wall (51), through which the secondary pulsed-air evacuation duct (14) extends.

4. Arrangement according to the preceding claim, **characterized in that** it comprises a sealing element (15) disposed at the opening (53) of the lateral wheel arch (5), in particular at an inner wheel arch wall (51) in order to seal the secondary air evacuation duct (14) passing through the wheel arch.

5. Arrangement according to any one of Claims 2 to 4, **characterized in that** at least one of the secondary air intake duct (13) and secondary pulsed-air evacuation duct (14) comprises at least one deformable zone (17), in particular an extensible portion, making it possible to partially break the rigid connection of the secondary duct (13, 14) that is fastened on one side to the battery or to the bodyshell and on the other side to the motor-fan (11).

6. Arrangement according to any one of Claims 2 to 5, **characterized in that** it comprises a damping means disposed between the motor-fan (11) and the bodyshell, in particular an inner wall (51) of the rear wheel arch (5) to which the motor-fan is fastened.

7. Arrangement according to any one of Claims 2 to 5, **characterized in that** a rear inner channel (20) of the trunk compartment (7) is created by the wheel arch (5), in particular the inner wall (51), a rear light reinforcer (54), a rear skirt (55) and a rear skirt lining (30).

8. Arrangement according to the preceding claim, **characterized in that** it comprises an air extraction device (60) disposed at the rear skirt (55).

9. Arrangement according to any one of Claims 2 to 8, **characterized in that** the main air supply duct (12) is disposed on the rear trunk floor (4), extends through an opening (8) in the trunk floor (4), one end (121) of the main duct (12) extending through at least one passage (341) provided at least in part at a lateral seat lining (35), the passage being extended by a front inner channel (21).

10. Arrangement according to the preceding claim, **characterized in that** the front inner channel (21) is created by the wheel arch, in particular the inner wall (51), and the lateral seat lining (35) that has in particular a grille (37) housed in the vicinity of a seat such that the air intended for the battery to be cooled is the air of the passenger compartment, in particular conditioned air.

11. Arrangement according to any one of Claims 2 to 10, **characterized in that** the battery (3) has a cooling air inlet opening (18) connected to the main air supply duct (12), an air outlet opening (19) connected to the motor-fan (11) by the secondary air intake duct (13).

12. Arrangement according to any one of Claims 2 to 11, wherein the starting up of the motor-fan (11) generates a circulation of air through:
- the air grille (37), which is in particular situated at the lateral seat lining (35), then
- the front inner channel (21), then
- the main air supply duct (12), then
- the battery (3) for storing electrical energy, then
- the secondary air intake duct (13) connecting the outlet of the battery to the inlet of the motor-fan (11), then
- through the motor-fan (11).

13. Arrangement according to the preceding claim, wherein the air pulsed by the motor-fan (11) then circulates through the secondary air evacuation duct (14) connecting the outlet of the motor-fan to the rear inner channel (20) of the trunk compartment (7).

14. Arrangement according to the preceding claim in combination with Claim 8, wherein the pulsed air then circulates through the device (60) for extracting air from the trunk compartment (7) that makes it possible to evacuate the air pulsed by the motor-fan (11) to the outside of the vehicle (1).

15. Arrangement according to Claim 12, wherein the air pulsed by the motor-fan (11) then circulates through the secondary air evacuation duct (14) that opens into the wheel arch.
